(19) **Europäisches Patentamt / European Patent Office / Office européen des brevets**

(11) **EP 4 509 304 A1**

(12) **EUROPEAN PATENT APPLICATION**
published in accordance with Art. 153(4) EPC

(43) Date of publication:
**19.02.2025 Bulletin 2025/08**

(21) Application number: **23774692.0**

(22) Date of filing: **15.03.2023**

(51) International Patent Classification (IPC):
*B32B 7/06* (2019.01)    *B32B 15/08* (2006.01)
*B32B 15/20* (2006.01)    *B32B 27/30* (2006.01)
*B32B 27/36* (2006.01)    *B32B 27/40* (2006.01)
*B44C 1/17* (2006.01)    *E04F 13/08* (2006.01)

(52) Cooperative Patent Classification (CPC):
**B32B 7/023; B32B 7/06; B32B 15/08; B32B 15/20;**
**B32B 27/00; B32B 27/30; B32B 27/36;**
**B32B 27/40; B44C 1/17; E04F 13/08**

(86) International application number:
**PCT/JP2023/010049**

(87) International publication number:
**WO 2023/182096 (28.09.2023 Gazette 2023/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.03.2022 JP 2022045050**

(71) Applicant: **Dai Nippon Printing Co., Ltd.**
**Tokyo 162-8001 (JP)**

(72) Inventors:
• **AKITA, Yasuhiro**
**Tokyo 162-8001 (JP)**
• **FURUTA, Satoshi**
**Tokyo 162-8001 (JP)**
• **HAYASHI, Yumiko**
**Tokyo 162-8001 (JP)**
• **SUGITA, Natsuo**
**Tokyo 162-8001 (JP)**
• **MIYAZAKI, Saori**
**Tokyo 162-8001 (JP)**

(74) Representative: **Müller-Boré & Partner**
**Patentanwälte PartG mbB**
**Friedenheimer Brücke 21**
**80639 München (DE)**

(54) **TRANSFER SHEET, METHOD FOR MANUFACTURING EXTERIOR MEMBER, AND EXTERIOR MEMBER**

(57) The present disclosure provides a transfer sheet for producing an exterior member including a metal member, the transfer sheet comprising: a releasing film, and a transfer layer disposed on one surface of the releasing film, wherein the transfer layer includes a first protective layer, a second protective layer, and a pattern layer, in this order from a releasing film side, in a thickness direction; the first protective layer and the second protective layer include a weather resistant agent; the transfer layer includes a low covered area with a hiding power ratio, measured according to JIS K 5600-4-1, of 50% or less; and in the low covered area, an ultraviolet ray transmittance is 1% or less, and a visible light transmittance is 40% or more.

[FIG. 1]

**Description**

Technical Field

The present disclosure relates to a transfer sheet, a method for producing an exterior member, and an exterior member.

Background Art

A decorative member including a base body and a decorative sheet is used as, for example, an interior member or an exterior member of a building. When the base body is a metal member, a unique design can be obtained by leveraging the luster of the metal. It also expands the range of design variations that can be expressed. However, decorative sheets generally include a substrate layer, and this substrate layer may be colored in some cases. For example, Patent Document 1 discloses a decorative sheet wherein a printing layer, an adhesive layer, an anchor layer, and an overlay film layer are stacked in this order on one surface of a colored substrate layer including thermoplastic resin. Also, since the thickness of the decorative sheet itself is relatively thick, the decorative sheet may affect the design. Therefore, when the decorative sheets are used, there is a margin for improvement in design expression leveraging the luster of the metal members. Also, in order to suppress deterioration due to outdoor exposure, particularly due to the influence of ultraviolet rays, the exterior members are required to have high weather resistance, compared to interior members.

Citation List

Patent Document

Patent Document 1: Japanese Patent Application Laid-Open (JP-A) No. 2016-168785

Summary of Disclosure

Technical Problem

In order to leverage the luster of the metal member that is a base body, the inventors of the present application have studies about the provision of a pattern layer on the metal member, by a transfer method, using a transfer sheet including a releasing film, and a transfer layer including at least a pattern layer. When a transfer sheet is used, it is not necessary to use the substrate layer in the decorative sheet, so that the luster of the metal member is less likely to be disturbed.

Also, in order to obtain excellent weather resistance, the inventors of the present application have studied about the placement of a protective layer (weather resistant layer) on the transfer layer of the transfer sheet, in addition to the pattern layer. That is, the inventors of the present application have studies about the provision of a pattern layer and a protective layer on the metal member, by a transfer method, using a transfer sheet including a releasing film, a protective layer, and a pattern layer in this order.

Since a high weather resistance is required to the exterior member, the ultraviolet ray transmittance of the transfer layer is preferably as low as possible. In order to reduce the ultraviolet ray transmittance of the transfer layer, it is effective to increase the amount of the weather resistant agent used in the protective layer. When the amount of the weather resistant agent used is increased, yellowing due to the weather resistant agent is easily induced. Therefore, the visible light transmittance of the transfer layer decreases, the design leveraging the luster of the metal member is hardly obtained. Meanwhile, when the visible light transmittance of the transfer layer is increased in order to leverage the luster of the metal member, it is difficult to sufficiently reduce the ultraviolet ray transmittance of the transfer layer. As a result, it is difficult to obtain good weather resistance.

The present disclosure has been made in view of the above circumstances, and a main object of the present disclosure is to provide a transfer sheet capable of producing an exterior member having excellent weather resistance, and design leveraging the luster of a metal member.

Solution to Problem

The present disclosure provides a transfer sheet for producing an exterior member including a metal member, the transfer sheet comprising: a releasing film, and a transfer layer disposed on one surface of the releasing film, wherein the transfer layer includes a first protective layer, a second protective layer, and a pattern layer, in this order from a releasing film side, in a thickness direction; the first protective layer and the second protective layer include a weather resistant agent; the transfer layer includes a low covered area with a hiding power ratio, measured according to JIS K 5600-4-1, of 50% or less; and in the low covered area, an ultraviolet ray transmittance is 1% or less, and a visible light transmittance is 40% or more.

The present disclosure provides a method for producing an exterior member including a metal member, the method comprising: a preparing step of preparing the transfer sheet described above; and a stacking step of stacking the transfer sheet on the metal member via an adhesive layer so that a pattern layer side surface of the transfer sheet faces the metal member.

The present disclosure provides an exterior member including a metal member, the exterior member comprising: a first protective layer; a second protective layer; a pattern layer; an adhesive layer; and the metal member in this order, in a thickness direction, wherein the first protective layer and the second protective layer include a weather resistant agent; an FI value of a surface of the metal member is 20 or more and 25 or less; and the exterior member includes an area with an FI value, measured from a first protective layer side, of 10 or more.

Advantageous Effects

The present disclosure exhibits effects that an exterior member having excellent weather resistance, and having a design leveraging the luster of a metal member may be provided.

Brief Description of Drawings

[FIG. 1] is a schematic cross-sectional view exemplifying a transfer sheet of the present disclosure.
[FIGS. 2] are schematic cross-sectional views exemplifying a method for producing an exterior member of the present disclosure.
[FIG. 3] is a schematic cross-sectional view exemplifying an exterior member of the present disclosure.
[FIG. 4] is a schematic view explaining a method for measuring an FI value.

Description of Embodiments

Embodiments are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure.

In the present descriptions, in expressing an aspect wherein some member is placed on the other member, when described as merely "above" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface", unless otherwise stated, it includes both of the following cases: a case wherein some member is placed directly on or directly below the other member so as to be in contact with the other member, and a case wherein some member is placed on the upper side or the lower side of the other member via yet another member.

The transfer sheet, the method for producing an exterior member, and the exterior member in the present disclosure are hereinafter described in detail.

A. Transfer sheet

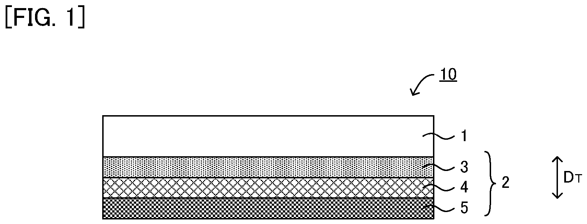

FIG. 1 is a schematic cross-sectional view exemplifying the transfer sheet of the present disclosure. The transfer sheet 10 shown in FIG. 1 comprises a releasing film 1, and a transfer layer 2 disposed on one surface of the releasing film 1, and the transfer layer 2 includes a first protective layer 3, a second protective layer 4, and a pattern layer 5, in this order from a releasing film 1 side, in a thickness direction $D_T$. In the present disclosure, the transfer layer 2 includes a low covered area with a hiding power ratio, measured according to JIS K 5600-4-1, of 50% or less; and in the low covered area, an ultraviolet ray transmittance is 1% or less, and a visible light transmittance is 40% or more.

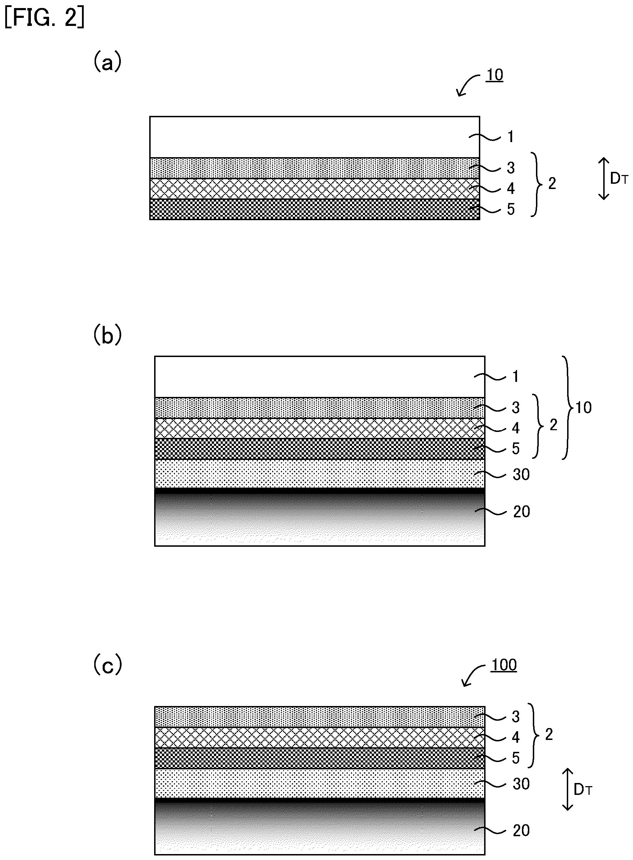

FIGS. 2 are schematic cross-sectional views exemplifying the method for producing an exterior member including a metal member, using the transfer sheet 10 shown in FIG. 1. Firstly, as shown in FIG. 2(a), a transfer sheet 10 described above is prepared. Then, as shown in FIG. 2(b), the transfer sheet 10 is stacked on the metal member 20 via an adhesive layer 30 so that the pattern layer 5 side surface of the transfer sheet 10 faces the metal member 20. The "pattern layer 5 side surface of the transfer sheet 10" refers to the side of the transfer sheet 10 that is located on the pattern layer 5 side, based on the releasing film 1. Then, as shown in FIG. 2(c), the releasing film 1 is peeled off from the transfer sheet 10. Thereby, an exterior member 100 wherein the transfer layer 2 in the transfer sheet 10 is transferred to the metal member 20 side, and including the first protective layer 3, the second protective layer 4, the pattern layer 5, the adhesive layer 30, and the metal member 20 in this order in a thickness direction $D_T$, may be obtained.

According to the present disclosure, in the low covered area of the transfer layer, since the ultraviolet ray transmittance is 1% or less, and the visible light transmittance is 40% or more, the exterior member has an excellent weather resistance, and has a design leveraging the luster of the metal member. As described above, since a high weather resistance is required for the exterior member, the ultraviolet ray transmittance of the transfer layer is preferably as low as possible. In order to reduce the ultraviolet ray transmittance of the transfer layer, it is effective to increase the amount of the weather resistant agent used in the protective layer. When the amount of weather resistant agent used is increased, yellowing due to the weather resistant agent is easily induced. Therefore, the visible light transmittance of the transfer layer decreases, the design leveraging the luster of the metal member is hardly obtained. Meanwhile, when the visible light transmittance of the transfer layer is increased in order to leverage the luster of the metal member, it is difficult to sufficiently reduce the ultraviolet ray transmittance of the transfer layer. As a result, it is difficult to obtain good weather resistance.

In the present disclosure, the inventors of the present disclosure have carried out intensive studies, focusing on achieving both of the improvement of the weather resistance and leveraging the luster of the metal member, and found out that the both can be achieved by setting the ultraviolet ray transmittance and the visible light transmittance in the low covered area to predetermined ranges.

Also, the transfer sheet in the present disclosure is usually used for producing an exterior member including a metal member. Higher weather resistance is required to exterior members (members for outdoor use) than interior members (members for indoor use). For example, when a decorative sheet is used to produce an exterior member, a transparent resin layer may be provided on the decorative sheet, in some cases, in order to improve the strength. In this case, since the transparent resin layer is a relatively thick layer, high weather resistance is imparted by, for example, adding a sufficient amount of weather resistant agent to the transparent resin layer. Meanwhile, it is technically difficult to impart high weather resistance to transfer sheets that do not include a layer corresponding to a transparent resin layer. In the present disclosure, both of the first protective layer and the second protective layer usually include a weather resistant agent. As a result, it is possible to impart high weather resistance while maintaining the properties required for the first protective layer (for example, surface properties such as abrasion resistance) and the properties required for the second protective layer (for example, close adhesiveness).

Also, in the case of transfer sheets, the close adhesiveness of the first protective layer and the second protective layer tends to be insufficient. Here, in the case of the decorative sheet, a pattern layer is usually formed on a substrate layer, then a second protective layer is formed on the pattern layer, and then, a first protective layer is formed on the second protective layer. Since the first protective layer is typically produced by curing a resin composition for a first protective layer formed on the second protective layer, the close adhesiveness between the first protective layer and the second protective layer is good. Meanwhile, typically, in the case of transfer sheets, a first protective layer is formed on a releasing film, then, a second protective layer is formed on the first protective layer, and then, a pattern layer is formed on the second protective layer. The first protective layer is typically produced by curing a resin composition for a first protective layer on the releasing film. Since the second protective layer is formed on that cured first protective layer, the close adhesiveness of the first protective layer and the second protective layer tends to be insufficient. In the present disclosure, the second protective layer is preferably a layer having higher flexibility than the first protective layer. Thereby, the close adhesiveness between the first protective layer and the second protective layer may be increased.

1. Transfer layer

The transfer layer in the present disclosure includes at least a first protective layer, a second protective layer, and a pattern layer, in this order from a releasing film side.

(1) Hiding power ratio

The transfer layer in the present disclosure includes a low covered area with a hiding power ratio, measured according to JIS K 5600-4-1, of 50% or less. In a plan view, for example, the transfer layer in the present disclosure includes both a low covered area with a hiding power ratio of 50% or less, and an area with a hiding power ratio of more than 50%. The area with the hiding power ratio of more than 50% is an area including a darker pattern layer, and there is no need to leverage the basis material.

The hiding power ratio of the transfer layer in the present disclosure is measured as follows.

1) The location of the transfer sheet where the hiding power ratio is to be measured is cut to a predetermined size.
2) A piece of tape is adhered to the upper edge of the transfer surface (the pattern layer side surface) of the cut transfer sheet, and the transfer layer is peeled off from the releasing film. Then, the tape is removed, and a monolayer of a transfer layer is obtained.
3) The monolayer of the transfer layer is stacked on a hiding power ratio test paper in accordance with JIS K 5600-4-1, the tristimulus values YW and YB are measured with a spectroscopic color-difference meter (spectroscopic colorimeter CM-3700A from Konica Minolta Inc.), and the hiding power ratio YB/YW is calculated as a percentage.

Although it differs depending on the degree of the color of the pattern layer, and the pattern of the pattern layer, the ratio of the low covered area, with respect to the area of the transfer layer in a plan view is, for example, 5% or more, may be 10% or more, may be 15% or more, and may be 30% or more. Meanwhile, the ratio of the low covered area, with respect to the area of the transfer layer in a plan view is, for example, 95% or less, may be 90% or less, and may be 80% or less. Also, the hiding power ratio in the low covered area may be 40% or less, and may be 35% or less.

(2) Visible light transmittance

In the low covered area, the visible light transmittance is usually 40% or more, may be 45% or more, and may be 50% or more. When the visible light transmittance of the transfer layer is the above range, the design expression leveraging the luster of the metal member is possible. The visible light transmittance refers to the average transmittance in the visible light region (for example, 380 nm or more and 780 nm or less).
Also, when the hiding power ratio in the low covered area is 40% or less, the visible light transmittance in the low covered area may be, for example, 45% or more, and may be 50% or more.

(3) Ultraviolet ray transmittance

In the low covered area, the ultraviolet ray transmittance is usually 1% or less, may be 0.5% or less, may be 0.2% or less, and may be 0.1% or less. When the ultraviolet ray transmittance of the transfer layer is in the above range, excellent weather resistance may be exhibited. The ultraviolet ray transmittance refers to the average transmittance in the ultraviolet ray region (for example, 280 nm or more and 350 nm or less).
Also, when the hiding power ratio in the low covered area is 40% or less, the ultraviolet ray transmittance in the low covered area is, for example, 1% or less, may be 0.5% or less, may be 0.2% or less, and may be 0.1% or less.
The ultraviolet ray transmittance of the area where the hiding power ratio of the transfer layer in the present disclosure is more than 50% may be 1% or less, may be 0.5% or less, may be 0.2% or less, and may be 0.1% or less. In other words, the ultraviolet ray transmittance of the transfer layer, in the entire area in a plan view, may be 1% or less, may be 0.5% or less, may be 0.2% or less, and may be 0.1% or less. Also, although it differs depending on the degree of the color of the pattern layer, for example, the visible light transmittance of the area where the hiding power ratio of the transfer layer in the present disclosure is more than 50% is, for example, less than 40%, and may be 20% or less.
Incidentally, in the present disclosure, the visible light transmittance and the ultraviolet ray transmittance of the low covered area are not necessary in the above ranges for the entire area, and the visible light transmittance and the ultraviolet ray transmittance, measured at least for the same location as the location where the hiding power ratio is measured to be 50% or less, has only to be the values described above or less. Meanwhile, the ratio of the area where the visible light transmittance and the ultraviolet ray transmittance are in the above ranges, with respect to the total area of the low covered area, may be 10% or more, may be 20% or more, and may be 30% or more. Meanwhile, the ratio of the area where the visible light transmittance and the ultraviolet ray transmittance are in the above ranges, with respect to the total area of the low covered area, may be 100% or less, may be 90% or less, and may be 80% or less.

(3) Thickness

The thickness of the transfer layer is, for example, 10 μm or more, may be 12 μm or more, and may be 14 μm or more. When the transfer layer is thin, sufficient weather resistance may not be obtained. Meanwhile, the thickness of the transfer layer is preferably 30 μm or less, may be 25 μm or less, and may be 20 μm or less. When the transfer layer is thick, it may be difficult to leverage the luster of the metal member. Specifically, the thickness of the transfer layer is the total thickness of the first protective layer, the second protective layer and the pattern layer.

(4) Layer structure

The transfer layer in the present disclosure may include only the first protective layer, the second protective layer, and the pattern layer, and may include other layers.

(i) First protective layer

The transfer sheet in the present disclosure includes a first protective layer. The first protective layer contributes to the improvement of the weather resistance by including a weather resistant agent. In addition, the first protective layer contributes to the improvement of the surface properties of the exterior member (for example, chafing resistance and fouling resistance). Also, when the hardness of the first protective layer is increased in order to improve the surface properties of the exterior member, the adhesiveness between the first protective layer and the pattern layer tends to decrease. The first protective layer and the releasing film may be disposed so as to be in direct contact, and may be disposed via another layer.

The first protective layer preferably includes a cured product of a curable resin composition (cross-linked structure) as a resin component. The ratio of the cured product of a curable resin composition is, for example, 70% by mass or more, may be 90% by mass or more, may be 95% by mass or more, and may be 100% by mass, with respect to all the resin components constituting the first protective layer.

Examples of the cured product of a curable resin composition may include a cured product of an ionizing radiation curable resin composition. Examples of the ionizing radiation curable resin composition may include an electron beam curable resin composition, and an ultraviolet ray curable resin composition. Among them, the electron beam curable resin compositions are preferred because of less odor since polymerization initiators are not necessary, and coloring is less likely to occur.

The ionizing radiation curable resin composition is a composition including a compound with an ionizing radiation curable functional group (hereinafter, it may be referred to as "ionizing radiation curable compound"). The ionizing radiation curable functional group is a group cross-linked and cured by an irradiation of ionizing radiation, and examples thereof may include functional groups including an ethylenically double bond such as a (meth) acryloyl group, a vinyl group, and an allyl group. Incidentally, in the present disclosure, the (meth)acryloyl group refers to an acryloyl group or a methacryloyl group. Also, in the present disclosure, the (meth)acrylate refers to an acrylate or a methacrylate.

The "ionizing radiation" refers to, among electromagnetic waves and charged particle beams, one having energy quantum capable of polymerizing or cross-linking molecules. Examples of the ionizing radiation may include electron beams (EB), and ultraviolet rays (UV). Also, other examples of the ionizing radiation may include electromagnetic waves such as X-rays and $\gamma$-rays; and charged particle beams such as $\alpha$-rays and ion rays.

The ionizing radiation curable compound preferably includes one kind or more selected from, for example, urethane(meth)acrylate, epoxy(meth)acrylate, polyester(meth) acrylate, polyether(meth) acrylate, polycarbonate(meth) acrylate, and acryl(meth)acrylate. Among them, the ionizing radiation curable compound preferably includes at least urethane(meth)acrylate. The urethane(meth)acrylate is preferably caprolactone based urethane acrylates. This is because it is easy to improve the weather resistance and scuff resistance of the first protective layer.

Also, the ionizing radiation curable compound may include caprolactone based urethane acrylate and urethane (meth)acrylate that is not caprolactone modified. In this case, the content of the caprolactone based urethane acrylate included in the first protective layer is regarded as $M_{CLUA}$, and the content of urethane (meth)acrylate that is not caprolactone modified is regarded as $M_{UA}$. The mass ratio of $M_{CLUA}$ ($M_{CLUA}/ (M_{UA} + M_{CLUA})$) with respect to the total of $M_{UA}$ and $M_{CLUA}$ is, for example, 40% by mass or more and 90% by mass or less, may be 45% by mass or more and 80% by mass or less, and may be 50% by mass or more and 70% by mass or less.

The caprolactone based urethane acrylate can usually be obtained by the reaction of caprolactone based polyols, organic isocyanates, and hydroxy (meth) acrylate. Examples of the method for synthesizing may include a method wherein polycaprolactone based polyols and organic polyisocyanates are reacted to produce polyurethane prepolymers including - NCO group (isocyanato group) at both ends, and then, reacted with hydroxy(meth)acrylate.

Commercially available caprolactone based polyols can be used, preferably with two hydroxyl groups, and with a number average molecular weight of preferably 500 to 3000, and more preferably 750 to 2000. Also, polyols other than the caprolactone based, for example, one kind or a plurality of polyols such as ethylene glycol, diethylene glycol, 1,4-butanediol, and 1,6-hexanediol, can be mixed and used in an arbitrary proportion. As the organic polyisocyanates, diisocyanates with two isocyanate groups are preferable, and from the viewpoint of suppressing yellowing, preferable examples may include isophorone diisocyanate, hexamethylene diisocyanate, 4,4'-dicyclohexylmethane diisocyanate, trimethylhexamethylene diisocyanate. Preferable examples of the hydroxy(meth)acrylate may include 2-hydroxyethylacrylate, 2-hydroxypropylacrylate, and caprolactone-modified-2-hydroxyethylacrylate.

When the ionizing radiation curable resin composition includes the caprolactone based polyols, the caprolactone based urethane acrylate is preferably caprolactone diol based urethane acrylates. The caprolactone diol based urethane acrylate refers to urethane acrylate whose terminal is diethylene glycol, among caprolactone based urethane acrylates. By using the caprolactone diol based urethane acrylate, cracking and bleaching can be suppressed in the first protective layer.

The number average molecular weight of the ionizing radiation curable compound is, for example, 300 or more and 10000 or less, may be 1000 or more and 10000 or less, and may be 2000 or more and 10000 or less. The number average molecular weight is the average molecular weight measured by GPC analysis, and converted to standard polystyrene.

For example, when the ionizing radiation curable compound is an ultraviolet ray curable compound, the ionizing radiation curable compound preferably includes at least one of a photopolymerization initiator and a photopolymerization accelerator.

Examples of the photopolymerization initiator may include acetophenone, benzophenone, α-hydroxyalkylphenone, Michler's ketone, benzoin, benzyldimethylketol, benzoyl benzoate, α-acyloxime esters, acylphosphine oxides, and thioxanthones. Examples of the photopolymerization accelerator may include p-dimethylaminobenzoic acid isoamyl ester and p-dimethylaminobenzoic acid ethyl ester.

The first protective layer includes a weather resistant agent. Examples of the weather resistant agent may include an ultraviolet absorber and a photostabilizer. The first protective layer preferably includes at least one of the ultraviolet absorber and the photostabilizer. The first protective layer may include one kind or two kinds or more of the ultraviolet absorbers. Similarly, the first protective layer may include one kind or two kinds or more of the photostabilizers.

Examples of the ultraviolet absorber included in the first protective layer may include organic based ultraviolet absorber such as triazine based ultraviolet absorbers, benzotriazole based ultraviolet absorbers, benzophenone based ultraviolet absorbers, oxybenzophenone based ultraviolet absorbers, salicylic acid ester based ultraviolet absorbers, and cyano(meth)acrylate based ultraviolet absorbers; and inorganic based ultraviolet absorbers such as titanium dioxide, cerium oxide, and zinc oxide. Among these, triazine based ultraviolet absorbers are more preferable.

Examples of the triazine based ultraviolet absorbers may include hydroxyphenyltriazine based ultraviolet absorbers. Examples of the hydroxyphenyltriazine based ultraviolet absorber may include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, and 2-(4,6-diphenyl-1,3,5-triazine-2-yl)-5[2-(2-ethylhexanoyloxy)ethoxy]phenol.

The content of the ultraviolet absorber included in the first protective layer is, for example, 0.5 parts by mass or more and 10 parts by mass or less, may be 0.8 parts by mass or more and 8 parts by mass or less, and may be 1 part by mass or more and 5 parts by mass or less, with respect to 100 parts by mass of the ionizing radiation curable compound. When the content of the ultraviolet absorber is high, the ultraviolet absorber may bleed-out, and when the content of the ultraviolet absorber is low, sufficient ultraviolet absorbing property may not be obtained.

Examples of the photostabilizer included in the first protective layer may include hindered amine based photostabilizers. Examples of the hindered amine photostabilizer may include 1,2,2,6,6-pentamethyl-4-piperidinyl methacrylate, bis(1,2,2,6,6-pentamethyl-4-piperidyl)sebacate, bis(2,2,6,6-pentamethyl-4-piperidyl)sebacate, bis(1,2,2,6,6-pentamethyl-4-piperidinyl)sebacate, methyl(1,2,2,6,6-pentamethyl-4-piperidinyl)sebacate, and 2,4-bis[N-butyl-N-(1-cyclohexyloxy-2,2,6,6-tetramethylpiperidine-4-yl)amino]-6-(2-hydroxyethylamine)-1,3,5-triazine.

The content of the photostabilizer included in the first protective layer is, for example, 1 part by mass or more and 10 parts by mass or less, may be 1.5 parts by mass or more and 8 parts by mass or less, and may be 2 parts by mass or more and 5 parts by mass or less, with respect to 100 parts by mass of the ionizing radiation curable compound. When the content of the photostabilizer is high, the photostabilizer may bleed-out, and when the content of the ultraviolet absorber is low, sufficient photostabilizing property may not be obtained.

The first protective layer may include additives such as silicone compounds, polymerization inhibitors, crosslinking agents, antistatic agents, adhesiveness improving agents, antioxidants, leveling agents, thixoactive agents, coupling agents, plasticizers, antifouling agents, and antifoaming agents. The first protective layer may or may not include a filling agent (filler). Examples of the filling agent may include organic filling agents and inorganic filling agents. Examples of the inorganic filling agent may include silica. Also, when the first protective layer does not include a filling agent, the decrease in transparency is suppressed. As a result, the deterioration in design quality is suppressed.

Also, the thickness of the first protective layer is, for example, 2 μm or more, may be 3 μm or more, and may be 4 μm or more. When the first protective layer is thin, sufficient weather resistance may not be obtained. Meanwhile, the thickness of the first protective layer is, for example, 20 μm or less, may be 15 μm or less, and may be 10 μm or less. When the first protective layer is thick, the hardness of the first protective layer increases, the following ability of the first protective layer with respect to the second protective layer decreases, the first protective layer is more prone to cracking, and good weather resistant close adhesiveness may not be obtained.

(ii) Second protective layer

The transfer sheet in the present disclosure includes a second protective layer. The second protective layer contributes to the improvement of the weather resistance by including a weather resistant agent, while contributing to the improvement of the close adhesiveness to the pattern layer. The second protective layer and the first protective layer may be disposed so as to be in direct contact, and may be disposed via another layer.

The second protective layer includes resin. Examples of the resin may include (meth)acrylic based resins, urethane based resins, butyral based resins, polyolefins, chlorinated polyolefins, vinyl chloride-vinyl acetate copolymers, and polyesters. Among them, urethane based resins are preferable. the second protective layer preferably includes a cured product of the resin (cross-linked structure).

The second protective layer preferably includes a cured product of a curable resin composition (particularly, a cured product of thermosetting resin composition). The thermosetting resin composition is a composition including at least thermosetting resin, and is a resin composition cured by heating. Examples of the thermosetting resin may include (meth) acrylic based resins, urethane based resins, urethane acrylic based resins, phenolic based resins, urea melamine based resins, epoxy based resins, unsaturated polyester based resins, and silicone based resins. Also, the thermosetting resin composition may be one wherein a curing agent such as isocyanate based curing agents and epoxy based curing agents are added to these resins.

The cured product of the thermosetting resin composition is preferably a cured product of a thermosetting resin composition including (meth)acrylic based resin, urethane based resin or urethane acrylic based resin, and more preferably a cured product of a thermosetting resin composition including urethane acrylic based resin. Also, in order to make the structure of the cured product more rigid, the thermosetting resin compositions preferably includes an isocyanate based curing agent or an epoxy based curing agent, and more preferably includes an isocyanate based curing agent. Among them, in order to suppressing yellowing, HDI (hexamethylene diisocyanate) based curing agent is preferable.

Also, when the second protective layer includes the urethane acrylic based resin, then urethane acrylic based resin is preferably a urethane acrylic copolymer, and more preferably a polycarbonate based urethane acrylic copolymer. The polycarbonate based urethane acrylic copolymer is a resin obtained by a radical polymerization of acrylic monomer to polycarbonate based polyurethane polymer obtained by reacting polycarbonate diol and (di)isocyanate.

Examples of the (di)isocyanate may include aromatic isocyanates such as 4,4'-diphenylmethane diisocyanate, 2,4-tolylene diisocyanate, 1,5-naphthalene diisocyanate, n-isocyanate phenylsulfonylisocyanate, o-isocyanate phenylsulfonylisocyanate, and p-isocyanate phenylsulfonylisocyanate; aliphatic isocyanates such as 1,6-hexamethylene diisocyanate; and cycloaliphatic isocyanates such as isophorone diisocyanate, hydrogenated xylylene diisocyanate, and hydrogenated diphenylmethane diisocyanate.

Examples of the acrylic monomer may include (meth)acrylic acid alkyl esters such as (meth)acrylate, methyl(meth)acrylate, ethyl(meth)acrylate, n-propyl(meth)acrylate, isopropyl(meth)acrylate, n-butyl(meth)acrylate, and isobutyl(meth)acrylate.

The mass ratio of the urethane components ([urethane components]/([acrylic components] + [urethane components])) with respect to the total of the acrylic components and the urethane components in the polycarbonate based urethane acrylic copolymers is, for example, 70% by mass or more and 95% by mass or less, may be 75% by mass or more and 95% by mass or less, and may be 80% by mass or more and 90% by mass or less. By setting the mass ratio to 70% by mass or more, the proportion of the polycarbonate structure in the polycarbonate based urethane acrylic copolymers can be increased, making the structure of the polycarbonate based urethane acrylic copolymers more rigid. As a result, the deformation with respect to temperature changes can be reduced. Also, setting the mass ratio to 95% by mass or less, it is easier to secure the flexibility of the second protective layer and improve close adhesiveness with the pattern layer.

The second protective layer includes a weather resistant agent. Examples of the weather resistance agent may include an ultraviolet absorber and a photostabilizer. The second protective layer preferably includes at least one of the ultraviolet absorber and the photostabilizer. Since preferable kinds and embodiments of the weather resistant agent are similar to the contents described in "(i) First protective layer" above, the descriptions herein are omitted. Particularly, the second protective layer preferably includes a triazine based ultraviolet absorber. Also, the second protective layer preferably includes a hindered amine based photostabilizer.

The content of the ultraviolet absorber included in the second protective layer is, for example, 0.1 parts by mass or more and 50 parts by mass or less, may be 3 parts by mass or more and 40 parts by mass or less, and may be 10 parts by mass or more and 35 parts by mass or less, with respect to 100 parts by mass of the resin components. Also, content of the ultraviolet absorber included in the second protective layer (content with respect to 100 parts by mass of the resin components) may be more than the content of the ultraviolet absorber included in the first protective layer (content with respect to 100 parts by mass of the resin components).

The content of the photostabilizer included in the second protective layer is, for example, 0.1 parts by mass or more and 15 parts by mass or less, may be 1 part by mass or more and 15 parts by mass or less, and may be 3 parts by mass or more and 10 parts by mass or less, with respect to 100 parts by mass of the resin components. Also, content of the photostabilizer included in the second protective layer (content with respect to 100 parts by mass of the resin components) may be more than the content of the photostabilizer included in the first protective layer (content with respect to 100 parts by mass of the resin components).

The second protective layer may include additives such as silicone compounds, polymerization inhibitors, cross-linking agents, antistatic agents, adhesiveness improving agents, antioxidants, leveling agents, thixoactive agents, coupling agents, plasticizers, antifouling agents, antifoaming agents, and filling agents. Also, the second protective layer may or may not include a filling agent.

Also, the thickness of the second protective layer is, for example, 2 $\mu$m or more, and may be 3 $\mu$m or more.

When the second protective layer is thin, the close adhesiveness to the pattern layer may not be sufficient. Meanwhile, the thickness of the second protective layer is, for example, 10 $\mu$m or less, may be 8 $\mu$m or less, and may be 5 $\mu$m or less. When the second protective layer is thick, the movement of the second protective layer due to heat increases, the first protective layer is more prone to cracking, and good weather resistant close adhesiveness may not be obtained.

(iii) Pattern layer

The transfer sheet of the present disclosure includes a pattern layer on the surface of the second protective layer that is opposite to the first protective layer. By providing the pattern layer, the designability of the exterior member is improved. The pattern layer and the second protective layer may be disposed so as to be in direct contact, and may be disposed via another layer.

The pattern layer is a layer on which ink is printed. Examples the pattern (design) in the pattern layer may include wood-grain, stone-grain, sand-grain, tile laying design, brick laying design, fabric-grain, leather tie-dyed pattern, geometric shapes, letters, symbols, abstract patterns, plant and flower patterns, wave patterns, stripes, metal tone (metallic) patterns, and rusty patterns.

The pattern layer usually includes a colorant and a binder resin. Examples of the colorant may include inorganic pigments such as carbon black (cake ink), iron black, titanium white, antimony white, lead yellow, titanium yellow, Bengal red, cadmium red, ultramarine blue, and cobalt blue; organic pigments (including dyes) such as quinacridone red, isoindolinone yellow, nickel azo complex, phthalocyanine blue, and azomethineazoblack; metallic pigments such as aluminum and brass; and pearl pigments such as titanium dioxide-coated mica, and basic lead carbonate.

Examples of the binder resins may include urethane based resins, acrylic polyol based resins, (meth)acrylic based resins, ester based resins, amide based resins, butyral based resins, styrene based resins, urethane-acrylic copolymers, vinyl chloride-vinyl acetate copolymers, vinyl chloride-vinyl acetate-acrylic copolymers, chlorinated propylene based resins, cellulose nitrate based resins, and cellulose acetate based resins.

The pattern layer may include an additive such as an ultraviolet absorber, a photostabilizer, a curing agent, a plasticizer, and a catalyst, if necessary. The thickness of the pattern layer is, for example, 0.5 $\mu$m or more and 20 $\mu$m or less, may be 1 $\mu$m or more and 10 $\mu$m or less, and may be 2 $\mu$m or more and 5 $\mu$m or less.

(iv) Others

The transfer layer in the present disclosure preferably includes no solid layer (a solid layer of ink). The solid layer is, for example, a solid layer of opaque color. This is because it is easy to obtain a low covered area by not including the solid layer.

2. Releasing film

The transfer sheet of the present disclosure includes a releasing film (first releasing film) on the surface of the first protective layer that is opposite to the second protective layer. The releasing film and the first protective layer may be disposed so as to be in direct contact, and may be disposed via another layer.

The releasing film is preferably a resin film. Examples of the resin included in the resin film may include ester based resins, olefin based resins, styrene based resins, vinyl based resins, (meth)acrylic based resins, amide based resins, imide based resins, and carbonate based resins.

The releasing film preferably includes ester based resins or olefin based resins.

Examples of the ester based resin may include polyethylene terephthalate (PET), polybutylene terephthalate (PBT), polyethylene naphthalate (PEN), and polyethylene terephthalate-isophthalate copolymers. Among them, PET or PBT is preferable, and PET is more preferable in terms of less heat shrinkage during the production of the transfer sheet, and less shrinkage due to irradiation of ionizing radiation.

Examples of the olefin based resin may include polyethylene, polypropylene, polybutene, ethylene-propylene copolymer, and ethylene-propylene-butene copolymer. Among them, polypropylene is preferable in terms of less heat shrinkage during the production of the transfer sheet, and less shrinkage due to irradiation of ionizing radiation.

Also, the 60° gloss value of the releasing film is preferably 25% or more in terms of obtaining an exterior member with a releasing film including a design leveraging the luster of the metal member. The 60° gloss value may be 30% or more, and may be 35% or more. The 60° gloss value of the releasing film is a value measured using a gloss meter (micro-TRI-gloss gloss meter from by BYK-Chemie GmbH), and by a method according to JIS Z8741:1997. Specifically, the measurement is carried out by placing the gloss meter so that the surface opposite side to the transfer surface (the surface on the side where the transfer layer is placed) of the releasing film is facing up, and reading the gloss value at 60°. Incidentally, the 60° gloss value is, for example, an average value of the measured value at arbitral 10 locations on the releasing film.

Also, the arithmetic average surface roughness Sa of the surface of the releasing film that is opposite to the transfer layer is preferably 0.5 $\mu$m or less. The reason therefor is to obtain an exterior member with a releasing film including a design leveraging the luster of the metal member. The arithmetic average surface roughness Sa may be 0.4 $\mu$m or less.

The arithmetic average surface roughness Sa is a three-dimensional extension of Ra, a two-dimensional roughness parameter described in JIS B0601:1994, and it is calculated from the following formula (i), setting orthogonal coordinate axis X and axis Y in the reference surface, regarding roughness curved surface as Z(x, y) and the sizes of the reference surface as Lx, Ly. Incidentally, in the formula (i), A = Lx $\times$ Ly.

[Mathematic 1]

$$\mathrm{Sa} \;=\; \frac{1}{A} \int_0^{Lx} \int_0^{Ly} \left| Z(x,y) \right| dx dy \quad (i)$$

Specifically, the measurement of the arithmetic average surface roughness Sa of the surface of the releasing film that is opposite to the transfer layer is carried out with the following measurement device and measurement conditions.

- Measurement device
  3D shape measuring machine VK-X1000 from Keyence Corporation
- Analyzing software
  Shape Measurement Laser Microscope VK-X100/X200 Series Analyzing application
- Measurement conditions
  5-fold lens
- Measured area
  500 $\mu$m wide x 500 $\mu$m long

The releasing film may be an oriented film, and may be a cast film. The draw ratio in the machine direction (MD) of the oriented film is, for example, 5-fold or more and 30-fold or less. The draw ratio in the transverse direction (TD) of the oriented film is, for example, 5-fold or more and 30-fold or less. Also, the thickness of the releasing film is, for example, 10 $\mu$m or more and 200 $\mu$m or less, may be 15 $\mu$m or more and 150 $\mu$m or less, and may be 20 $\mu$m or more and 100 $\mu$m or less.

3. Transfer sheet

The transfer sheet in the present disclosure includes a releasing film, and a transfer layer (at least a first protective layer, a second protective layer, and a pattern layer) in this order, in the thickness direction.

The transfer sheet in the present disclosure may include a second releasing film on the surface of the pattern layer that is opposite to the second protective layer. For example, when the transfer sheet is rolled up during the production, an occurrence of blocking can be suppressed. The second releasing film is usually peeled off from the transfer sheet before the stacking step described later. Since the details of the second releasing film are similar to the contents described for the first releasing film above, the descriptions herein are omitted.

4. Method for producing transfer sheet

The method for producing a transfer sheet in the present disclosure is not particularly limited, and examples thereof may include a method wherein a first protective layer is formed on the surface of a releasing film, then, a second protective layer is formed on the surface of the first protective layer that is opposite to the releasing film, and then, a pattern layer is formed on the surface of the second protective layer that is opposite to the first protective layer.

Examples of a method for forming a first protective layer may include a method wherein the surface of the releasing film is coated with a composition for forming a first protective layer, and cured. Examples of the method for applying the composition may include a gravure printing method, a bar coating method, a roll coating method, a reverse roll coating method, and a comma coating method. Examples of the method for curing may include a method wherein ionizing radiations such as electron beams and ultraviolet rays are irradiated.

Examples of a method for forming a second protective layer may include a method wherein the surface of the first protective layer that is opposite to the releasing film is coated with a composition for forming a second protective layer, and cured if necessary. Examples of the method for applying the composition may include a gravure printing method, a bar coating method, a roll coating method, a reverse roll coating method, and a comma coating method. Examples of the method for curing may include a heating. Also, examples of the method for forming a pattern layer may include a method wherein the surface of the second protective layer that is opposite to the first protective layer is coated with an ink including a colorant, a binder resin, and a solvent.

5. Use application

The transfer sheet in the present disclosure is used for producing an exterior member including a metal member. By providing the transfer layer described above on a metal member by a transfer method, using the transfer sheet of the present disclosure, an exterior member having excellent weather resistance, and further having a design leveraging the luster of a metal member may be provided. Specifically when the FI value of the metal member is 20 or more and 25 or less, and when a stacked body is formed by stacking the transfer sheet on the metal member via an adhesive layer so that a pattern layer side surface faces the metal member, and peeling the releasing film off, an exterior member wherein the FI value (measured from the transfer layer side) of the low covered area in the stacked body is 10 or more, may be obtained. The FI value of such exterior member is similar to the contents described in "C. Exterior member" later, descriptions herein are omitted.

B. Method for producing exterior member

The present disclosure provides a method for producing an exterior member including a metal member, the method comprising: a preparing step of preparing the transfer sheet described above; and a stacking step of stacking the transfer sheet on the metal member via an adhesive layer so that a pattern layer side surface of the transfer sheet is on the metal member side. According to the present disclosure, an exterior member having excellent weather resistance, and further, having a design leveraging the luster of a metal member, may be provided.

FIGS. 2 are schematic cross-sectional views exemplifying the method for producing an exterior member of the present disclosure. Since FIGS. 2 are described in the section "A. Transfer sheet" above, the explanations are omitted herein.

1. Preparing step

The preparing step in the present disclosure is a step of preparing a transfer sheet including a releasing film, a first protective layer, a second protective layer, and a pattern layer in this order, in a thickness direction. Since the transfer sheet is similar to those described in the section "A. Transfer sheet" above, descriptions thereof are omitted herein.

2. Stacking step

The stacking step in the present disclosure is a stacking step of stacking the transfer sheet on the metal member via an adhesive layer so that a pattern layer side surface of the transfer sheet faces the metal member.

(1) Metal member

The metal member in the present disclosure is a member including metals as a main component. Examples of the metal included in the metal member may include aluminum, and steel, and aluminum is preferable. That is, the metal member is preferably an aluminum member. The shape of the metal member is not particularly limited, and examples may include a plate shape, a sheet shape, and a tridimensional shape. Also, the metal member may include a flat surface portion, may include a curved surface portion, and may include both the flat surface portion and the curved surface portion. Also, the metal member may include at least one of a convex portion, a concave portion, a protruded portion, a recessed portion, and a through portion.

The surface of the metal member exhibits a different color tone according to the angle of illumination and viewing angle. a flip-flop index (FI value) is an index that indicates this color tone specific to the metal. This flip-flop property is expressed by the magnitude of the difference in color tone when the metal member surface is viewed from different angles. In the present disclosure, the flip-flop index value (FI value) of the metal member is preferably 20 or more and 25 or less. The FI value can be calculated by the following formula.

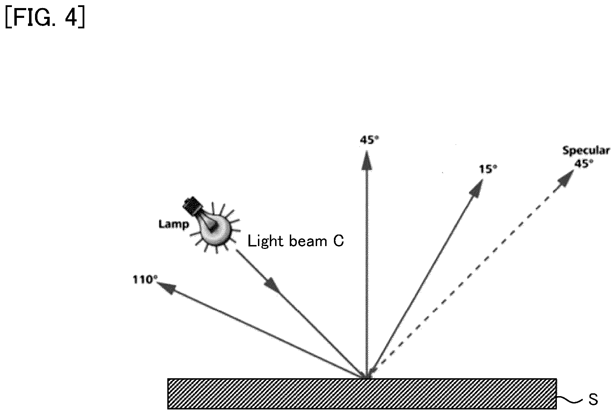

As shown in FIG. 4, a metal member is disposed as a sample S, and the brightness index L* of the L*a*b*color system specified in JIS Z 8729 is measured at offset angles of 15°, 45° and 110° from the regular reflection light of irradiated light beam C, from the first direction that is a 45° tilted angle with respect to perpendicular direction to the surface of the metal member. For colorimetry, for example, the MA68II Multi-Angle Spectrophotometric colorimeter from X-Rite Incorporated can be used. The measurement conditions are D65 light source, and field of view of 10°.

Then, the flip-flop index (FI) can be determined by assigning each brightness index into the following formula.

[Mathematic 2]

$$FI = 2.69 \times \frac{(L*15° - L*110°)^{1.11}}{L*45°^{\ 0.86}}$$

(In the formula, L*15°, L*45°, and L*110° are respectively L* in the L*a*b* color system specified in JIS Z 8729 at offset angles of 15°, 45° and 110° from regular reflection light of the incident light at an angle of 45° to the perpendicular direction to the stacked surface.)

(2) Adhesive layer

In order to obtain the adhesion between the transfer sheet and the metal member, the adhesive layer in the present disclosure is disposed between the pattern layer side surface of the transfer sheet and the metal member. In order to obtain a design leveraging the luster of the metal member, the adhesive layer is preferably transparent.

The adhesive used for the adhesive layer is not particularly limited, and commonly known adhesive can be used. Preferably examples may include adhesives such as heat-sensitive adhesives and pressure-sensitive adhesives. Examples of the resin used for the adhesives constituting this adhesive layer may include acrylic resins, polyurethane resins, vinyl chloride resins, vinyl acetate resins, vinyl chloride-vinyl acetate copolymer resins, styrene-acrylic copolymer resins, polyester resins, and polyamide resins, and these may be used alone, or multiple types of these may be combined and used. Also, two-component curing type polyurethane adhesives using isocyanate compounds as curing agents, and polyester based adhesives can also be applied.

A pressure-sensitive adhesive may also be used for the adhesive layer. Various pressure-sensitive adhesives such as acrylic based, urethane based, silicone based, and rubber based can be selected and used as appropriate as the pressure-sensitive adhesive.

In the present disclosure, the thickness of the adhesive layer is not particularly limited, and from the viewpoint of obtaining excellent adhesion, it is preferably 1 μm or more, more preferably 5 μm or more, and further preferably 10 μm or more. Meanwhile, in order to obtain a design leveraging the luster of the metal member, it is preferably 30 μm or less, more preferably 25 μm or less, and further preferably 20 μm or less.

(3) Method for stacking

In the stacking step, the transfer sheet is stacked on the metal member via the adhesive layer so that the pattern layer side surface of the transfer sheet faces the metal member. Specifically, an adhesive layer is disposed between the pattern layer side surface of the transfer sheet and the metal member, and the transfer sheet, the adhesive layer, and the metal member are closely adhered. The adhesive layer may be integrated with the transfer sheet in advance, and may be integrated with the metal member in advance.

Examples of the method for closely adhering the transfer sheet, the adhesive layer, and the metal member may include a lamination method. In the lamination method, for example, a stacked body including the transfer sheet, the adhesive layer, and the metal member is heated and pressurized from the transfer sheet side. Examples of the method for heating and pressuring may include a method using a roll transfer device. When hot melt adhesive (heat-sensitive adhesive) is used as the adhesive, although it depends on the type of the resin constituting the adhesive, the heating temperature is preferably 160°C or more and 200°C or less, and for a reactive hot melt adhesive, the heating temperature is preferably 100°C or more and 130°C or less. Also, a vacuum forming processing is generally performed while heating, and it is preferably 80°C or more and 130°C or less, and more preferably 90°C or more and 120°C or less.

Also, after the stacking step, the method for producing an exterior member in the present disclosure may further include a peeling step of peeling the releasing film off from the first protective layer.

3. Exterior member

The exterior member produced in the present disclosure is a member including a first protective layer, a second protective layer, a pattern layer, an adhesive layer, and the metal member in this order. The exterior member may be an exterior member including a releasing film including a releasing film on the surface of the first protective layer that is opposite to the second protective layer; and may be an exterior member not including a releasing film.

The exterior member produced in the present disclosure is an exterior member having excellent weather resistance, and having a design leveraging the luster of a metal member. Specifically when the FI value of the surface of the metal member is 20 or more and 25 or less, and when a stacked body is formed by stacking the transfer sheet on the metal member via an adhesive layer so that a pattern layer side surface faces the metal member, and peeling the releasing film off, an exterior member wherein the FI value (measured from the transfer layer side) of the low covered area in the stacked body is 10 or more, may be obtained. Since such the FI value is similar to the contents described in "C. Exterior member" below, the descriptions herein are omitted.

C. Exterior member

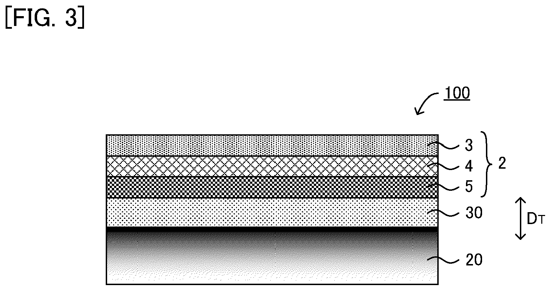

FIG. 3 is a schematic cross-sectional view exemplifying the exterior member of the present disclosure. The exterior member 100 shown in FIG. 3 include a first protective layer 3, a second protective layer 4, a pattern layer 5, an adhesive layer 30, and the metal member 20 in this order. Also, the first protective layer 3 and the second protective layer 4 include a weather resistant agent. Further, the exterior member 100 includes an area with an FI value, measured from a first protective layer 3 side, of 10 or more.

The exterior member of the present disclosure has excellent weather resistance, and further, it has a design leveraging the luster of a metal member.

Since the first protective layer, the second protective layer, the pattern layer, the adhesive layer, and the metal member are similar to the contents described in "A. Transfer sheet" and "B. Method for producing exterior member" above, the descriptions herein are omitted.

1. FI value

The exterior member of the present disclosure includes an area with an FI value, measured from a first protective layer side, of 10 or more.

The method for measuring the FI value of the exterior member is similar to the method described in "B. Method for producing exterior member, 2. Stacking step, (1) Metal member", except that the exterior member is used as the measurement sample S in FIG. 4, and measured from the first protective layer side. In the exterior member in the present disclosure, the FI value of the exterior member measured at the same location as the location where the hiding power ratio described above is measured to be 50% or less, of the transfer layer in the transfer sheet, is preferably 10 or more.

The exterior member of the present disclosure preferably includes an area where the retention ratio (FI value of the exterior member/ FI value of the metal member) with respect to the FI value of the surface of the metal member is 50% or more, and preferably includes an area where the retention ratio is 60% or more.

2. Use application

The exterior member of the present disclosure is usually used in exterior (outdoor). Examples of the use application of the exterior member may include construction material. Specific examples of the construction material may include exterior members such as eave soffits, exterior walls, and roofs of buildings such as houses, factories, shops, and hospitals.

The present disclosure is not limited to the embodiments described above. The embodiments are exemplification, and any other variations are intended to be included in the technical scope of the present disclosure if they have substantially the same constitution as the technical idea described in the claim of the present disclosure and offer similar operation and effect thereto.

EXAMPLES

[Example 1]

(Preparation of transfer sheet)

A PET film (DIAFOIL E130-26, from Mitsubishi Chemical Corporation) was prepared as a releasing film. The 60° gloss value of the surface of the releasing film, that is opposite to the side where the transfer layer is disposed, was 27% or more, and the arithmetic average surface roughness Sa was 0.3 $\mu$m. The following resin composition for forming a first protective layer was applied on the surface of the PET film so as the coating amount after drying was 5 g/m$^2$, and dried. Then, an electron beam (pressurized voltage: 175 keV, 5 Mrad (50 kGy)) was irradiated to form a first protective layer with a thickness of 5 $\mu$m.

<Resin composition for forming first protective layer>

• Urethane acrylate: 100 parts by mass (Bifunctional caprolactone modified urethane acrylate/ multifunctional urethane acrylate = 50/50 (mass ratio))

• Triazine based ultraviolet absorber: 4 parts by mass
("3 parts by mass of "Tinuvin 479" (from BASF) and 1 part by mass of "Tinuvin 400" (from BASF))
• Photostabilizer: 3 parts by mass
(Product name: LS-3410, from Nippon NYUKAZAI Co., Ltd.)
• Solvent: adequate amount
(Methyl ethyl ketone)

Then, on the surface of the obtained first protective layer, the following resin composition for forming a second protective layer was applied, dried, and a second protective layer with a thickness of 4 $\mu$m was formed.

<Resin composition for forming second protective layer>

• Polycarbonate based urethane acrylic copolymer: 100 parts by mass (Urethane component/ acrylic component = 90/10 (mass ratio))

• Triazine based ultraviolet absorber: 35 parts by mass
(18 parts by mass of "Tinuvin 479" (from BASF) and 17 parts by mass of "Tinuvin 400" (from BASF))
• Photostabilizer: 3.5 parts by mass
("Tinuvin 123" (from BASF))
• Hexamethylene diisocyanate based curing agent: 6 parts by mass
• Solvent: adequate amount
(Methyl ethyl ketone)

Then, on the surface of the obtained second protective layer, a pattern layer (wave pattern) with a thickness of 6 $\mu$m was formed using a gravure printing machine. The pattern layer mainly included gray colored portions and brown colored portions.

Thereby, a transfer sheet including the releasing film, the first protective layer, the second protective layer, and the pattern layer in this order, in the thickness direction, was obtained. The first protective layer, the second protective layer and the pattern layer were to be the transfer layers. The thickness of the transfer layers (the total thickness of the first protective layer, the second protective layer and the pattern layer) was 15 $\mu$m.

[Measurement of hiding power ratio, visible light transmittance, and ultraviolet ray transmittance]

For the gray colored portion of the wave pattern of the transfer layer of the obtained transfer sheet, the hiding power ratio, the visible light transmittance, the ultraviolet ray transmittance and the total light transmittance were measured by the following measurement methods. The results are shown in Table 1.

• Method for measuring

1) the location where the hiding power ratio of the obtained transfer sheet was to be measured (gray colored portion of the wave pattern) was cut to a predetermined size.
2) A piece of tape was adhered to the upper edge of the transfer surface of the cut transfer sheet, and the transfer layer was peeled off from the releasing film. After that, the tape was removed, and a monolayer of a transfer layer was obtained.

3) The monolayer of the transfer layer was stacked on a hiding power ratio test paper in accordance with JIS K 5600-4-1, the tristimulus values YW and YB were measured with a spectroscopic colorimeter (CM-3700A from Konica Minolta Inc.), and the hiding power ratio YB/YW was calculated as a percentage. The hiding power ratio was 22%.

4) For the gray colored portion of the wave pattern where the hiding power ratio was measured, the visible light transmittance, the ultraviolet ray transmittance and the total light transmittance were measured. Incidentally, the visible light transmittance was the average transmittance in the visible light region (wavelength of 380 mm or more and 780 nm or less), and the ultraviolet ray transmittance was the average transmittance in the ultraviolet ray region (wavelength of 280 nm or more and 350 nm or less). The total light transmittance was a value measured according to JIS K 7361-1:1997.

[Example 2]

A transfer sheet was prepared in the same manner as in Example 1 except that a pattern layer with a metal tone (metallic) pattern including blue colored portions and orange colored portions was formed using a gravure printing machine. The visible light transmittance, the ultraviolet ray transmittance and the total light transmittance were measured at the location (the blue colored portion of the metal tone (metallic) pattern, hiding power ratio of 30%) where the hiding power ratio measured by the measurement method described above was 50% or less. The results are shown in Table 1.

[Example 3]

A transfer sheet was prepared in the same manner as in Example 1 except that a pattern layer with a wood-grain pattern including black colored portions and brown colored portions was formed, using a gravure printing machine, and an exterior member was obtained. The visible light transmittance, the ultraviolet ray transmittance and the total light transmittance were measured at the location (the brown colored portion of the wood-grain pattern, hiding power ratio of 19%) where the hiding power ratio measured by the measurement method described above was 50% or less. The results are shown in Table 1.

[Example 4]

A transfer sheet was prepared in the same manner as in Example 1 except that a pattern layer with a diamond pattern including gray colored portions was formed, using a gravure printing machine, and an exterior member was obtained. The visible light transmittance, the ultraviolet ray transmittance and the total light transmittance were measured at the location (the gray colored portion of the diamond pattern, hiding power ratio of 26%) where the hiding power ratio measured by the measurement method described above was 50% or less. The results are shown in Table 1.

[Example 5]

A transfer sheet was prepared in the same manner as in Example 1 except that a pattern layer with a vertical line pattern including colored portions and transmitting portions was formed, using a gravure printing machine, and an exterior member was obtained. The visible light transmittance, the ultraviolet ray transmittance and the total light transmittance were measured at the location (the transmitting portion of the vertical line pattern, hiding power ratio of 14%) where the hiding power ratio measured by the measurement method described above was 50% or less. The results are shown in Table 1.

[Comparative Example 1]

A transfer sheet was prepared in the same manner as in Example 1 except that a pattern layer with a stone-grain pattern was formed, using a gravure printing machine, and an exterior member was obtained. The visible light transmittance, the ultraviolet ray transmittance and the total light transmittance were measured at the block colored portion of the stone-grain pattern (hiding power ratio of 55%). The results are shown in Table 1.

[Comparative Example 2]

A transfer sheet was prepared in the same manner as in Example 1 except that a pattern layer with a rusty tone pattern was formed, a solid layer was further formed so as to be a transfer layer with a thickness of 15 $\mu$m, using a gravure printing machine, and an exterior member was obtained. The visible light transmittance, the ultraviolet ray transmittance and the total light transmittance were measured at the brown colored portion of the rusty tone pattern (hiding power ratio of 74%). The results are shown in Table 1.

(Preparation of exterior member)

The pattern layer side surface of the transfer sheet obtained above was coated with a hot melt-type two-component adhesive (solvent based), dried, and an adhesive layer (thickness of 10 μm) was formed.

Then, the obtained adhesive layer and a metal member (aluminum member, FI value of 22) were disposed so that they face each other, using a laminator (RT-300 from Navitas Machinery Co., Ltd.), heated and pressurized from the transfer sheet side at a laminating roll temperature of 180°C and a transfer speed of 2 m/min, and cured for three days at 50°C to closely adhere the transfer sheet, adhesive layer, and the metal member. After that, the releasing film was peeled off, and an exterior member was obtained.

(Evaluation)

• Measurement of FI value

For the obtained exterior member, the FI value of the exterior member was measured at the same location as the hiding power ratio measured location of the transfer layer in the transfer sheet. Using MA68II Multi-Angle Spectrophotometric colorimeter from X-Rite Incorporated, the brightness index L* was measured at offset angles of 15°, 45° and 110° from the regular reflection light of irradiated light beam C, from the first direction that was a 45° tilted angle with respect to perpendicular direction to the surface. The measurement conditions were D65 light source, and field of view of 10°. Then, the flip-flop index (FI) was calculated by assigning each brightness index into the formula described above. The results are shown in Table 1.

• Visual Luminance

Arbitrary 20 adults visually observed the appearance of the exterior member, and evaluated according to the following criteria. The results are shown in Table 1.

◎: 18 or more responded that the luminance under room fluorescent lighting was good
○: 15 or more and 17 or less responded that the luminance under room fluorescent lighting was good
△: 11 or more and 14 or less responded that the luminance under room fluorescent lighting was good
×: 10 or less responded that the luminance under room fluorescent lighting was good

Table 1]

|  | Ex. 1 | Ex. 2 | Ex. 3 | Ex. 4 | Ex. 5 | Comp. Ex. 1 | Comp. Ex. 2 |
|---|---|---|---|---|---|---|---|
| With or without solid layer | Without | Without | Without | Without | Without | Without | With |
| Transfer layer thickness [μ m] | 15 | 15 | 15 | 15 | 15 | 15 | 15 |
| Hiding power ratio of measured location [%] | 22 | 30 | 19 | 26 | 14 | 55 | 74 |
| Total light transmittance [%] | 52.1 | 48.7 | 43.2 | 81.7 | 46.2 | 34.9 | 12.5 |
| Visible light transmittance [%] (380-780nm) | 66.95 | 52.50 | 45.01 | 83.35 | 50.01 | 37.25 | 9.86 |
| UV transmittance [%] (280-350nm) | 0.134 | 0.037 | 0.135 | 0.052 | 0.028 | 0.019 | 0.0034 |
| FI value | 14.11 | 12.86 | 12.15 | 16.59 | 12.89 | 9.24 | 5.11 |
| Visual Luminance | ○ | ○ | ○ | ◎ | ○ | △ | × |

As shown in Table 1, it was confirmed that, in the low covered area, for the transfer layer wherein the ultraviolet ray transmittance was 1% or less, and the visible light transmittance was 40% or more, a design leveraging the luster of the metal member, which was the basis material, was obtained.

In the present disclosure, for example, the following inventions are provided.

[1] A transfer sheet for producing an exterior member including a metal member, the transfer sheet comprising:

a releasing film, and a transfer layer disposed on one surface of the releasing film, wherein
the transfer layer includes a first protective layer, a second protective layer, and a pattern layer, in this order from a releasing film side, in a thickness direction;
the first protective layer and the second protective layer include a weather resistant agent;
the transfer layer includes a low covered area with a hiding power ratio, measured according to JIS K 5600-4-1, of 50% or less; and
in the low covered area, an ultraviolet ray transmittance is 1% or less, and a visible light transmittance is 40% or more.

[2] The transfer sheet according to [1], wherein a thickness of the transfer layer is 10 μm or more and 30 μm or less.
[3] The transfer sheet according to [1] or [2], wherein the first protective layer includes a cured product of an ionizing radiation curable resin composition.
[4] The transfer sheet according to any one of [1] to [3], wherein the second protective layer includes a cured product of a thermosetting resin composition.
[5] The transfer sheet according to any one of [1] to [4], wherein the first protective layer includes a cured product of an electron beam curable resin composition including urethane (meth)acrylate.
[6] The transfer sheet according to any one of [1] to [5], wherein the second protective layer includes a cured product of a thermosetting resin composition including a polycarbonate based urethane acrylic copolymer.
[7] The transfer sheet according to any one of [1] to [6], wherein the first protective layer includes at least one of an ultraviolet absorber and a photostabilizer as the weather resistant agent.
[8] The transfer sheet according to any one of [1] to [7], wherein the first protective layer includes a triazine based ultraviolet absorber as the weather resistant agent.
[9] The transfer sheet according to any one of [1] to [8], wherein the second protective layer includes at least one of an ultraviolet absorber and a photostabilizer as the weather resistant agent.
[10] The transfer sheet according to any one of [1] to [9], wherein the second protective layer includes a triazine based ultraviolet absorber as the weather resistant agent.
[11] The transfer sheet according to any one of [1] to [10], wherein a 60° gloss value of a surface of the releasing film that is opposite to the transfer layer is 25% or more.
[12] The transfer sheet according to any one of [1] to [11], wherein an arithmetic average surface roughness Sa of a surface of the releasing film that is opposite to the transfer layer is 0.5 μm or less.
[13] The transfer sheet according to any one of [1] to [12], wherein an FI value of the metal member is 20 or more and 25 or less; and
when a stacked body is formed by stacking the transfer sheet on the metal member via an adhesive layer so that a pattern layer side surface faces the metal member, and peeling the releasing film off, an FI value (measured from a transfer layer side) of the low covered area in the stacked body is 10 or more.
[14] The transfer sheet according to any one of [1] to [13], wherein the metal member is an aluminum member.
[15] A method for producing an exterior member including a metal member, the method comprising:

a preparing step of preparing the transfer sheet according to any one of [1] to [14]; and
a stacking step of stacking the transfer sheet on the metal member via an adhesive layer so that a pattern layer side surface of the transfer sheet faces the metal member.

[16] The method for producing an exterior member according to [15], further comprising, after the stacking step, a peeling step of peeling the releasing film off from the transfer sheet.
[17] An exterior member including a metal member, the exterior member comprising:

a first protective layer; a second protective layer; a pattern layer; an adhesive layer; and the metal member in this order, in a thickness direction, wherein
the first protective layer and the second protective layer include a weather resistant agent;
an FI value of the metal member is 20 or more and 25 or less; and
the exterior member includes an area with an FI value, measured from a first protective layer side, of 10 or more.

Reference Signs List

17

1: releasing film
2: transfer layer
3: first protective layer
4: second protective layer
5: pattern layer
10: transfer sheet
20: metal member
30: adhesive layer
100 exterior member

**Claims**

1. A transfer sheet for producing an exterior member including a metal member, the transfer sheet comprising:

   a releasing film, and a transfer layer disposed on one surface of the releasing film, wherein
   the transfer layer includes a first protective layer, a second protective layer, and a pattern layer, in this order from a releasing film side, in a thickness direction;
   the first protective layer and the second protective layer include a weather resistant agent;
   the transfer layer includes a low covered area with a hiding power ratio, measured according to JIS K 5600-4-1, of 50% or less; and
   in the low covered area, an ultraviolet ray transmittance is 1% or less, and a visible light transmittance is 40% or more.

2. The transfer sheet according to claim 1, wherein a thickness of the transfer layer is 10 $\mu$m or more and 30 $\mu$m or less.

3. The transfer sheet according to claim 1, wherein the first protective layer includes a cured product of an ionizing radiation curable resin composition.

4. The transfer sheet according to claim 1, wherein the second protective layer includes a cured product of a thermosetting resin composition.

5. The transfer sheet according to claim 1, wherein the first protective layer includes a cured product of an electron beam curable resin composition including urethane (meth)acrylate.

6. The transfer sheet according to claim 1, wherein the second protective layer includes a cured product of a thermosetting resin composition including a polycarbonate based urethane acrylic copolymer.

7. The transfer sheet according to claim 1, wherein the first protective layer includes at least one of an ultraviolet absorber and a photostabilizer as the weather resistant agent.

8. The transfer sheet according to claim 1, wherein the first protective layer includes a triazine based ultraviolet absorber as the weather resistant agent.

9. The transfer sheet according to claim 1, wherein the second protective layer includes at least one of an ultraviolet absorber and a photostabilizer as the weather resistant agent.

10. The transfer sheet according to claim 1, wherein the second protective layer includes a triazine based ultraviolet absorber as the weather resistant agent.

11. The transfer sheet according to claim 1, wherein a 60° gloss value of a surface of the releasing film that is opposite to the transfer layer is 25% or more.

12. The transfer sheet according to claim 1, wherein an arithmetic average surface roughness Sa of a surface of the releasing film that is opposite to the transfer layer is 0.5 $\mu$m or less.

13. The transfer sheet according to claim 1, wherein an FI value of the metal member is 20 or more and 25 or less; and
    when a stacked body is formed by stacking the transfer sheet on the metal member via an adhesive layer so that a

18

pattern layer side surface faces the metal member, and peeling the releasing film off, an FI value (measured from a transfer layer side) of the low covered area in the stacked body is 10 or more.

14. The transfer sheet according to claim 1, wherein the metal member is an aluminum member.

15. A method for producing an exterior member including a metal member, the method comprising:

a preparing step of preparing the transfer sheet according to any one of claims 1 to 14; and
a stacking step of stacking the transfer sheet on the metal member via an adhesive layer so that a pattern layer side surface of the transfer sheet faces the metal member.

16. The method for producing an exterior member according to claim 15, further comprising, after the stacking step, a peeling step of peeling the releasing film off from the transfer sheet.

17. An exterior member including a metal member, the exterior member comprising:

a first protective layer; a second protective layer; a pattern layer; an adhesive layer; and the metal member in this order, in a thickness direction, wherein
the first protective layer and the second protective layer include a weather resistant agent;
an FI value of the metal member is 20 or more and 25 or less; and
the exterior member includes an area with an FI value, measured from a first protective layer side, of 10 or more.

[FIG. 1]

[FIG. 2]

(a)

(b)

(c)

[FIG. 3]

[FIG. 4]

# INTERNATIONAL SEARCH REPORT

| | International application No. |
|---|---|
| | **PCT/JP2023/010049** |

### A. CLASSIFICATION OF SUBJECT MATTER

***B32B 7/06***(2019.01)i; ***B32B 15/08***(2006.01)i; ***B32B 15/20***(2006.01)i; ***B32B 27/30***(2006.01)i; ***B32B 27/36***(2006.01)i; ***B32B 27/40***(2006.01)i; ***B44C 1/17***(2006.01)i; ***E04F 13/08***(2006.01)i

FI: B32B7/06; B32B15/08 H; B32B15/20; B32B27/30 A; B32B27/36 102; B32B27/40; B44C1/17 C; E04F13/08 A

According to International Patent Classification (IPC) or to both national classification and IPC

### B. FIELDS SEARCHED

Minimum documentation searched (classification system followed by classification symbols)

B32B; B44C1/16-1/175; E04F13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-12283 A (OTIS CO., LTD.) 23 January 2020 (2020-01-23)<br>entire text | 1-17 |
| A | JP 1-141099 A (TOPPAN PRINTING CO., LTD.) 02 June 1989 (1989-06-02)<br>entire text | 1-17 |
| A | JP 61-89899 A (TOPPAN PRINTING CO., LTD.) 08 May 1986 (1986-05-08)<br>entire text | 1-17 |
| A | JP 5-246199 A (YABU KK) 24 September 1993 (1993-09-24)<br>entire text | 1-17 |
| A | JP 62-39298 A (TOYO INK MFG. CO., LTD.) 20 February 1987 (1987-02-20)<br>entire text | 1-17 |
| A | JP 62-244699 A (TOYO INK MFG. CO., LTD.) 26 October 1987 (1987-10-26)<br>entire text | 1-17 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **26 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/010049**

| C. | DOCUMENTS CONSIDERED TO BE RELEVANT | |
|---|---|---|
| Category* | Citation of document, with indication, where appropriate, of the relevant passages | Relevant to claim No. |
| A | JP 3-130199 A (DAINIPPON PRINTING CO., LTD.) 03 June 1991 (1991-06-03)<br>entire text | 1-17 |
| A | JP 64-69396 A (DAINIPPON PRINTING CO., LTD.) 15 March 1989 (1989-03-15)<br>entire text | 1-17 |
| A | JP 2016-68409 A (DAINIPPON PRINTING CO., LTD.) 09 May 2016 (2016-05-09)<br>entire text | 1-17 |
| A | JP 2007-118465 A (DAINIPPON PRINTING CO., LTD.) 17 May 2007 (2007-05-17)<br>entire text | 1-17 |
| A | JP 3-130200 A (DAINIPPON PRINTING CO., LTD.) 03 June 1991 (1991-06-03)<br>entire text | 1-17 |

Form PCT/ISA/210 (second sheet) (January 2015)

INTERNATIONAL SEARCH REPORT
Information on patent family members

International application No.

**PCT/JP2023/010049**

| Patent document cited in search report | | | Publication date (day/month/year) | Patent family member(s) | Publication date (day/month/year) |
|---|---|---|---|---|---|
| JP | 2020-12283 | A | 23 January 2020 | (Family: none) | |
| JP | 1-141099 | A | 02 June 1989 | (Family: none) | |
| JP | 61-89899 | A | 08 May 1986 | (Family: none) | |
| JP | 5-246199 | A | 24 September 1993 | (Family: none) | |
| JP | 62-39298 | A | 20 February 1987 | (Family: none) | |
| JP | 62-244699 | A | 26 October 1987 | (Family: none) | |
| JP | 3-130199 | A | 03 June 1991 | (Family: none) | |
| JP | 64-69396 | A | 15 March 1989 | (Family: none) | |
| JP | 2016-68409 | A | 09 May 2016 | (Family: none) | |
| JP | 2007-118465 | A | 17 May 2007 | (Family: none) | |
| JP | 3-130200 | A | 03 June 1991 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016168785 A